Europäisches Patentamt

European Patent Office

Office européen des brevets

(19)

(11) **EP 0 777 146 B1**

(12) **EUROPEAN PATENT SPECIFICATION**

(45) Date of publication and mention
of the grant of the patent:
**02.11.2000 Bulletin 2000/44**

(51) Int Cl.7: **G03B 21/00**, G09F 19/18,
H04N 9/31

(21) Application number: **97200412.1**

(22) Date of filing: **17.09.1990**

(54) **Projection type display device**

Projektionsanzeigevorrichtung

Dispositif d'affichage par projection

(84) Designated Contracting States:
**DE FR GB NL**

(30) Priority: **05.10.1989 JP 26088289**

(43) Date of publication of application:
**04.06.1997 Bulletin 1997/23**

(62) Document number(s) of the earlier application(s) in
accordance with Art. 76 EPC:
**90310142.6 / 0 421 628**

(73) Proprietor: **SEIKO EPSON CORPORATION**
**Shinjuku-ku Tokyo (JP)**

(72) Inventors:
• **Karasawa, Johji**
**Suwa-shi, Nagano-ken (JP)**
• **Shinozaki, Junishirou**
**Suwa-shi, Nagano-ken (JP)**

(74) Representative: **Sturt, Clifford Mark et al**
**Miller Sturt Kenyon**
**9 John Street**
**London WC1N 2ES (GB)**

(56) References cited:
**EP-A- 0 083 440          US-A- 4 127 322**
**US-A- 4 749 259          US-A- 4 913 529**

• **PATENT ABSTRACTS OF JAPAN vol. 012, no.**
**370 (P-767) [3217] , 5 October 1988 & JP 63**
**121821 A (HITACHI LTD), 25 May 1988**
• **PATENT ABSTRACTS OF JAPAN vol. 012, no.**
**439 (P-788), 18 November 1988 & JP 63 168622**
**A (CANON INC), 12 July 1988**
• **PATENT ABSTRACTS OF JAPAN vol. 012, no.**
**461 (E-689), 5 December 1988 & JP 63 185188 A**
**(CANON INC), 30 July 1988**

**Description**

The present invention relates to a projection type display device.

Such a display device, as shown in Figure 13, is known from Japanese Laid-Open Patent No. 63-185188. In this device, a polariser 44 receives light from a light source 1 to select a desired polarised light component from a P-polarised light component and an S-polarised light component.

A spectroscopic dichroic mirror 45 separates light transmitted from the polariser 44 into three primary colours: red, green and blue. The red colour component R follows a straight light path and is reflected by light reflectors 46. The green light component G passes straight through without any change. The blue light component B follows a straight light path and is reflected by further light reflectors 46. The three light components are light modulated by corresponding liquid crystal light valves 8R, 8G and 8B, respectively. A synthesising dichroic prism 47 synthesises the modulated light and then irradiates the light onto a polarised light plate 48. The polarised light plate 48 re-selects a desired polarised light component to obtain a picture image. A projection lens 49 enlarges the picture image for projection onto a screen 13.

However, 50% of the light irradiated onto the polariser 44 is inevitably lost in such a conventional projection type liquid crystal display device, in that a desired polarised light component is selected from light from the light source 1 and is transmitted through the polariser 44 while an undesired polarised light component is absorbed in the polariser 44. Moreover, a desired brightness cannot be provided with a polariser having 80% transmittance in spite of a high luminance intensity of the light source.

Further, the polariser 44 is placed just near to the light source 1 and is affected by heat absorption in that the ability of the polariser to polarise light varies, hindering stable reliability of the device under a wide range of ambient temperatures. A high revolution type of cooling fan with high cooling capability is required to obtain stable reliability of the device. However, such a cooling fan generates considerable noise, so a projection type liquid crystal display device, which can be applied to current audio and video appliances, cannot be achieved.

JP-A-63121821 discloses an arrangement in which light from a light source is split into separate P and S wave components by a polarising element. The P wave component is converted to an S wave by a $\lambda/2$ plate. The converted S wave is reflected by a mirror onto a liquid crystal element together with the original S wave.

Another example of a similar arrangement is disclosed in JP-A-63 168 622.

According to the invention there is provided a projection type display device as defined in claim 1.

A cubic polariser which comprises a pair of right angled prisms may be provided as the polarising beam splitter in the device, the sloping surfaces of the prisms each having a dielectric laminated coating layer and being adhered to each other.

Alternatively the polarising beam splitter comprises a single glass plate, or a plurality of glass plates laminated in parallel, arranged at a polarisation angle with respect to the angle of the incident light.

In the case where a cubic polariser is used as the polarising beam splitter, if light is irradiated at 45° with respect to the sloping surfaces coated with the dielectric laminated coating layer, the incident light can be separated into a P-polarised light component and an S-polarised light component with more than 98% precision attained. In the case where laminated glass plates are utilised as the polarising beam splitter and are arranged so that the light incident angle is fixed to be equal to the polarisation angle, the polarising beam splitter may transmit 100% of the P-polarised light component and reflect the S-polarised light component in accordance with the number of plates, so that the incident light can be accurately separated into P-polarised light and S-polarised light.

The polarisation direction converting means may variously comprise one or a plurality of light reflectors, a $\lambda/4$ plate, or a $\lambda/2$ plate.

The separated and polarised light components are advantageously optically oriented geometrically by reflection by the light reflector(s) or by passing through either the $\lambda/4$ plate or the $\lambda/2$ plate, so that they are irradiated onto the liquid crystal light valve as a desired polarised light component for projecting a picture image.

Preferably, both of the polarised light components are irradiated substantially in parallel by means of a wedge type light reflector.

The light intensity variation is effectively improved by substantially equalling the distances to the liquid crystal light valve from the separation region of the P- and S-polarised light components by using the wedge type light reflector.

Advantageously, the two polarised light components, which are irradiated substantially in parallel, are condensed by means of a lens for transmission to the light separation means.

As mentioned above, the polarising beam splitter may separate incident light from the light source into P- and S-polarised light components, and the polarisation direction converting means may transmit the components substantially in parallel such that the area of illumination of the parallel irradiation is twice that of the light before the separation. By condensing the two parallel polarised light components with a combination of a convex lens and a concave lens, a smaller aperture for the liquid crystal light valve can be employed with a larger light source, which is useful for effectively utilising the light flux from the light source.

Separate halves of the aperture of the liquid crystal light valve may conveniently be irradiated by each of the polarised light components.

More effective utilisation of the light flux from the light source can be realised if the two polarised light components are set so that they each irradiate half of the aperture of the liquid crystal light valve.

The liquid crystal display device described below provides high reliability under a wide range of ambient temperatures, and achieves such a low noise that it is readily applicable to current audio and video apparatus.

The invention is described further, by way of example, with reference to the accompanying drawings, in which:-

Figure 1 is a diagrammatic view of a liquid crystal display device;

Figure 2 is a diagrammatic perspective view of a polarising beam splitter of the display device of Figure 1, in the form of a cubic polariser;

Figure 3 is a diagrammatic view showing a further polarising beam splitter in the form of a glass plate;

Figure 4 is a diagram showing the relationship between the number of glass plates and degree of polarisation in a polarising beam splitter using glass plates;

Figure 5 is a diagrammatic perspective view of a polarisation direction converter of the display device of Figure 1 not in accordance with the invention, the converter employing light reflectors;

Figure 6 is a diagrammatic view of another polarisation direction converter not in accordance with the invention, the converter employing a λ/4 plate;

Figure 7 is a diagram illustrating the principle of operation of the polarisation direction converter of Figure 6;

Figure 8 is a diagrammatic view of a further polarisation direction converter not in accordance with the invention, the converter employing a λ/2 plate;

Figure 9 is a diagram illustrating the principle of operation of the polarisation direction converter of Figure 8;

Figure 10 is a diagrammatic view of an alternative polarisation direction converter not in accordance with the invention, the converter employing a λ/2 plate;

Figure 11 is a diagrammatic view of a polarisation direction converter according to the present invention, the converter employing a λ/2 plate;

Figure 12 is a diagrammatic view of an embodiment of a liquid crystal display device in accordance with the invention, the device having a combination lens just behind the polarisation direction converter of Figure 11; and

Figure 13 is a diagrammatic view of a prior art projection type liquid crystal display device.

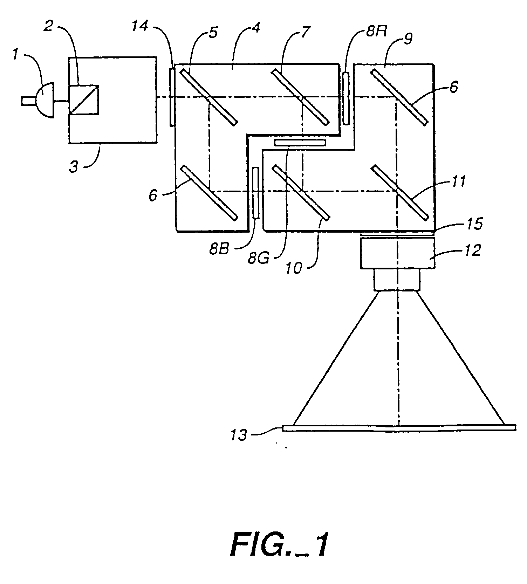

The display device shown in Figure 1 has a light source 1 comprising a high colour rendering lamp, such as a halogen lamp, a xenon lamp or a metal halide lamp. A polarising beam splitter 2 receives light from the light source 1. A P-polarised light component passes through the polarising beam splitter 2 and an S-polarised light component is reflected at a reflective surface of the polarising beam splitter 2. A polarisation direction converter 3 receives both of the P- and S-polarised light components from the polarising beam splitter 2 and unifies them into either P- or S-polarised light for sending substantially in parallel to light separation means 4. A blue colour reflective dichroic mirror 5 receives both of the polarised light components and reflects blue coloured light (less than 500 nm) and transmits other coloured light (yellow colour). A light reflector 6 deflects the reflected blue coloured light to a blue colour liquid crystal light valve 8B. The other coloured light transmitted through the dichroic mirror 5 is received by a green colour light reflective dichroic mirror 7, which reflects green coloured light (between about 500 nm to about 600 nm), and transmits red coloured light (more than about 600 nm). The reflected green coloured light enters a green liquid crystal light valve 8G, while the transmitted red coloured light enters a red liquid crystal light valve 8R. The liquid crystal light valves 8R, 8G and 8B modulate optically the respective coloured light to form a picture image for each of the colours according to the amplitude of an applied signal voltage. The liquid crystal light valves 8R, 8G and 8B perform a shutter function for controlling the transmittance of incident light. In addition to an active matrix liquid crystal panel, and a simple matrix liquid crystal panel, the liquid crystal panel may be one which can vary the transmittance in response to signal voltages.

The liquid crystal light valves 8R, 8G and 8B modulate optically the coloured light for input to light synthesising means 9. The blue coloured light is transmitted through a blue colour transmitting dichroic mirror 10 and then is reflected by a red colour transmitting dichroic mirror 11. The green coloured light is reflected by the blue colour transmitting dichroic mirror 10 and the red colour transmitting dichroic mirror 11. The red coloured light is reflected by a further light reflector 6 and is then transmitted by the red colour transmitting dichroic mirror 11. A projecting lens 12 receives colour synthesised light obtained in the above manner to project an enlarged image on a front screen 13.

The liquid crystal light valves 8R, 8G and 8B can be replaced by arranging the corresponding dichroic mirrors to obtain the light separation and the light synthesis in the same manner as above.

The liquid crystal light valves 8R, 8G and 8B can display a picture image by selecting the polarised light component using the polarisers 14 and 15. However, the polarising beam splitter 2 which has a degree of polarisation of nearly 100% does not need the polariser 14, which is used simply as an auxiliary polariser for the polarising beam splitter 2.

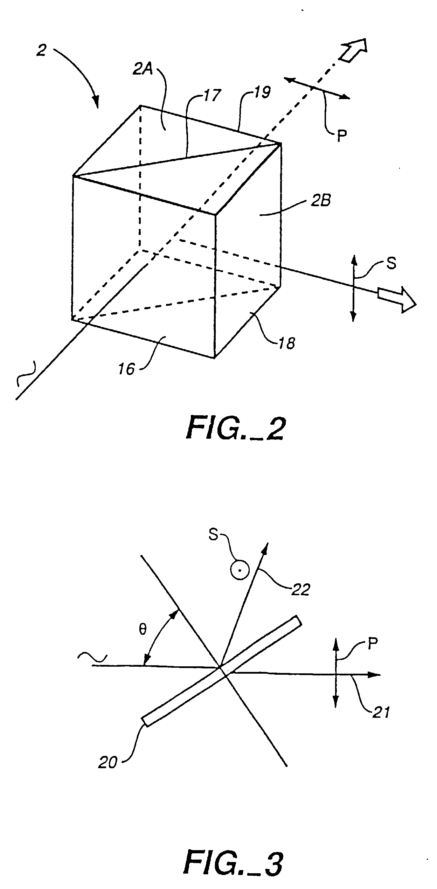

Figure 2 is a diagram showing a polarising beam splitter in the form of a cubic polariser comprising a pair of right angled prisms. A dielectric layer formed by laminating alternately a high refractive index material and a low refractive index material is coated on the sloping surface of each of the two right angled prisms. The polariser is formed by joining the sloping surfaces with an adhesive. The non-polarised light is applied at 0° with respect to an outer surface 16 of the cubic polariser (or at 45° with respect to the dielectric laminated coating layer 17 of the adhered interface) and is separated into a P-polarised light component and a S-polarised light component, which are perpendicular with respect to each other, at the dielectric laminated coating layer 17. The two components are emitted separately from two outer surfaces 18 and 19, respectively, of the cubic polariser at an accurate angle of 90°. That is, the P-polarised light component of the incident light beam which enters the cubic polariser at a polarisation angle passes through each interface between the laminations of the coating layer 17 totally without reflection. Although the S-polarised light component is reflected partially at each of the interfaces, the total reflectance becomes finally more than 98% because of the great number of the interfaces. Therefore, when a cubic polariser is used as a polarising beam splitter 2, the polariser 14 shown in Figure 1 can be removed.

The polarised light component separation in the cubic polariser shown in Figure 2 uses a similar principle as a polarising beam splitter in the form of a glass plate as described below.

Figure 3 is a diagram illustrating the principle of a polarising beam splitter employing a glass plate 20. The glass plate 20 has a thickness of about 1 mm. When the glass plate 20 is arranged to suit the following condition:

$$\theta = \tan^{-1} (n2 / n1)$$

where

  n2 is the refractive index of the glass plate 20,
  n1 is the refractive index of a medium through which the incident light passes before the glass plate 20, and
  θ is the angle of incidence of the light,

100% of the P-polarised light component 21 passes through and about 15% of the S-polarised light component 22 is reflected by the glass plate (θ is the polarisation angle in this case). Hence, in the case where a plurality of the glass plates 20 are laminated in parallel, ideally 100% of the P-polarised light component 21 is transmitted and 100% of the S-polarised light component 22 is reflected.

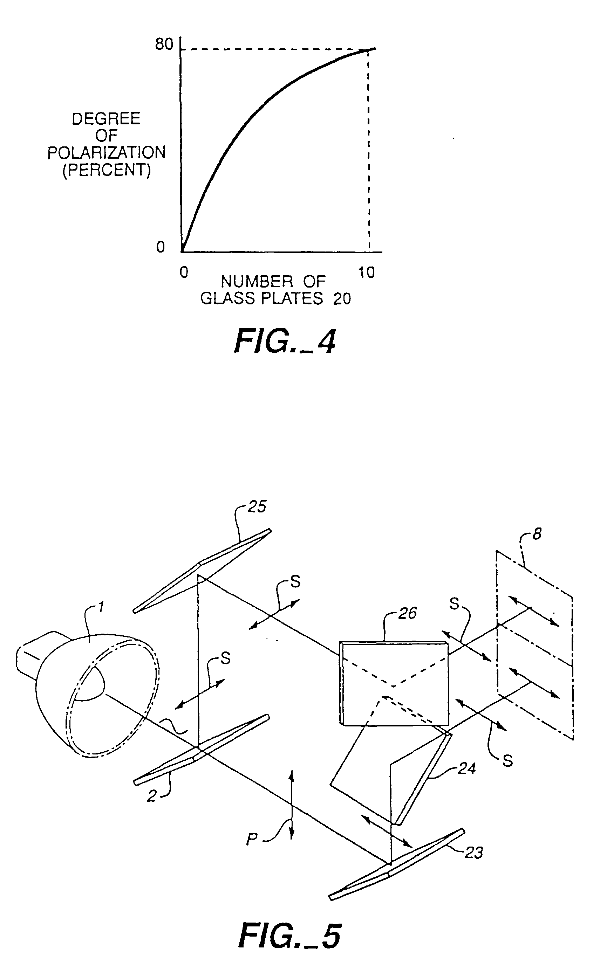

Figure 4 shows the relationship between the number of glass plates 20 indicated along the abscissa and the degree of polarisation indicated along the ordinate as obtained by actual measurements. About an 80% degree of polarisation can be achieved with eight to ten glass plates, with about 30% of the S-polarised light component being absorbed, whereby a temperature rise of the polariser can be minimised.

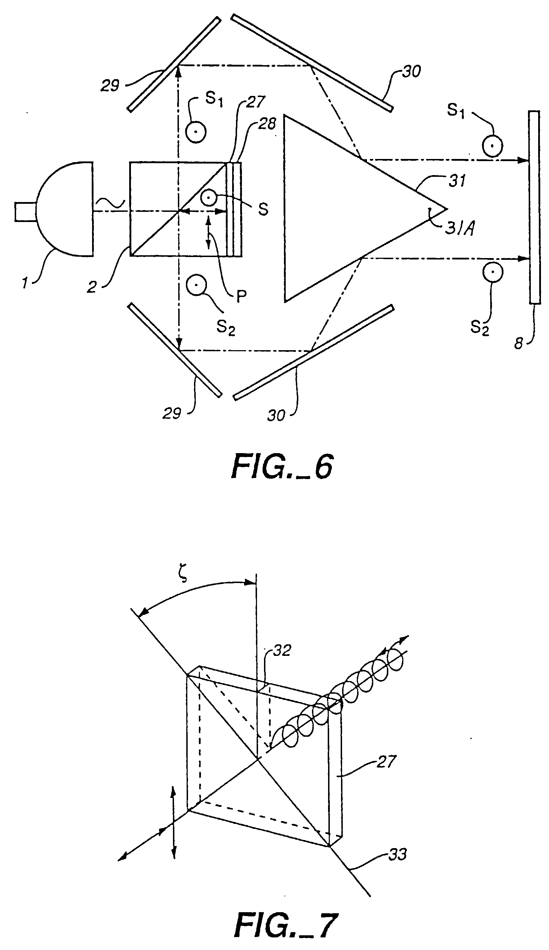

Figure 5 shows a device in which light reflectors are used as the polarisation direction converter 3. The polarising beam splitter 2 separates light from the light source 1 into a P-polarised light component being transmitted light, and an S-polarised light component being reflected light. The travelling direction and the polarising direction of the P-polarised light are converted by light reflectors 23 and 24. The travelling direction of the S-polarised light component is changed by light reflectors 25 and 26. The two light components travel substantially in the same direction and in parallel and are converted into polarised light in the same polarising direction, to be irradiated in parallel. That is, the polarised light which is separated into P- and S-polarised light components can be emitted substantially in parallel by orienting the travelling direction and the polarisation direction by means of a combination of geometric optical reflective direction characteristics. Both of the polarised light components are illuminated separately on a respective half of the aperture of the liquid crystal light valve 8, as shown in Figure 5.

The cubic polariser or a glass plate polariser may be selected as the polarising beam splitter 2. The above mentioned arrangement performs image formation and image projection after the parallel emission. The arrangement of the light reflectors can orient the emitted light into a P-polarised light component and can select between vertical parallel emitted light or horizontal parallel emitted light.

Figure 6 is a diagram showing another converter using a λ/4 plate as the polarisation direction converter 3. The polarising beam splitter 2 separates emitted light from the light source into a P-polarised light component being transmitted light and an S-polarised light component being reflected light. The λ/4 plate 27 transmits the P-polarised light component, converting the straight polarised light into circular polarised light. Front reflection means 28 reflect the circular polarised light to reverse its propagation direction. Then, the light is reconverted into straight polarised light by being re-transmitted into the λ/4 plate 27. The light is thus converted into an S-polarised light component, which is perpendicular to the polarised light first entering into the λ/4 plate 27, and then goes back to the polarising beam splitter 2. The S-polarised light component which is returned to the polarising beam splitter 2 is deflected at the reflective surface of the polarising beam splitter 2 and then passes to a wedge type light reflector 31 after repeated reflection at reflection means 29 and 30.

On the other hand, the S-polarised light component which is initially reflected at the reflective surface of the polarising beam splitter 2 is symmetrically reflected with respect to the foregoing S-polarised light component transmitted through the λ/4 plate about the light axis of the light source by further reflection means 29 and 30. The S-polarised light component then passes to the wedge type light reflector 31 and is deflected by the wedge type light reflector 31 together with the above mentioned converted S-polarised light component to be emitted substantially in parallel, and they are illuminated separately onto the aperture of the liquid crystal light valve 8. The wedge type light reflector 31 has a wedge type body formed of a metal, such as aluminium or stainless steel, and a high reflection mirror coating, such as a metal coating and a dielectric laminated coating layer, formed on the surface of the body.

Figure 7 is a diagram illustrating the principle of the λ/4 plate 27. When an angle S , which is made by the polarised light plane 32 of the incident light and the crystal light axis 33 of the λ/4 plate 27, is 45°, the λ/4 plate 27 converts incident straight polarised light into circular polarised light, or vice versa.

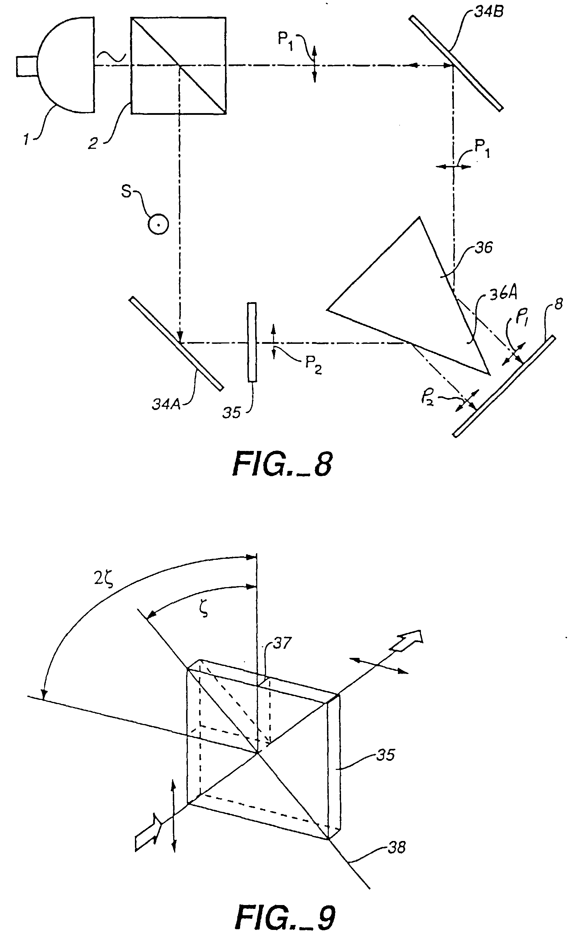

Figure 8 shows another converter using a λ/2 plate as the polarisation direction converter 3. The polarising beam splitter 2 separates the light from the light source 1 into a P-polarised light component being transmitted light and an S-polarised light component being reflected light. A light reflector 34 deflects the reflected S-polarised light component to a λ/2 plate 35, which rotates the polarised light surface through 90° to produce a P-polarised light component for transmission to a wedge type light reflector 36. On the other hand, another light reflector 34 deflects the transmitted P-polarised light component to the wedge type light reflector 36. The wedge type light reflector 36 irradiates the two P-polarised light components substantially in parallel and separately to the aperture of the liquid crystal light valve 8. In order to transmit both of the polarised light components substantially in parallel oriented into a single polarised light component, the λ/2 plate 35 may also be arranged in the light path of the S-polarised light component entering the light reflector 34. Alternatively, it may be arranged in the light path of the P-polarised light component entering or leaving the other light reflector 34, if an S-polarised light component is to be supplied to the liquid crystal light valve 8. In this converter, the wedge type light reflector 36 is used in a similar manner to that of the converter of Figure 6. In both cases, the length of the light path from the polarising beam splitter 2 to the liquid crystal light valve 8 is substantially equal for both the polarised light components. As is clear from the Figures, both of the wedge type light reflectors 31 and 36 enable a substantially equal and shortest length of light path to be realised, whereby to prevent an occurrence of a split between the two oriented light components. Therefore, the wedge type light reflector is effectively utilised to realise a bright projected picture image with reduced unevenness.

Figure 9 is a diagram showing the principle of the λ/2 plate 35. When the angle S which is made by the polarised light plane 37 of the incident light and the crystal light axis 38 of the λ/2 plate is 45°, the λ/2 plate 35 rotates the polarisation plane of the incident polarised light through 90° so that the P- (or S-) polarised light component is converted into an S-(or P-) polarised light component.

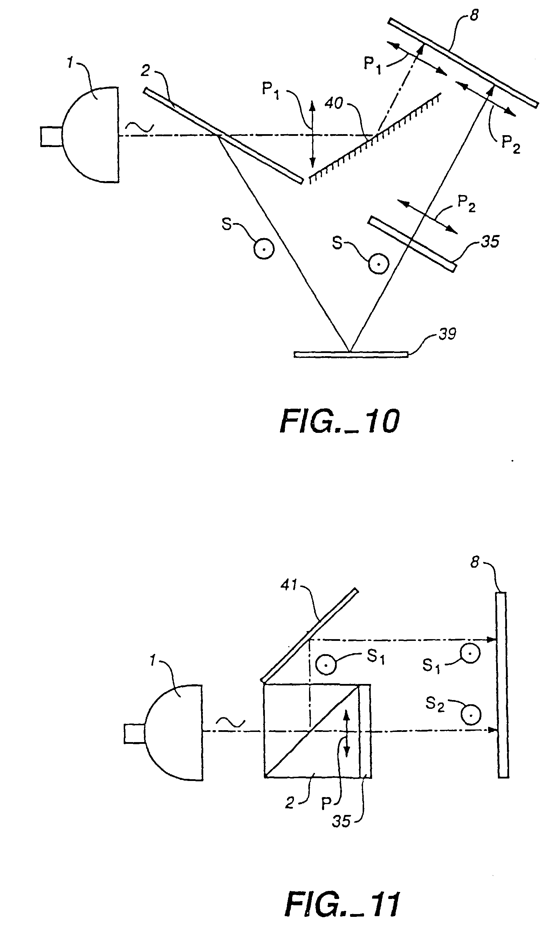

Figure 10 is a diagram showing another arrangement, not part of the invention, using the λ/2 plate 35 as the polarisation direction converter 3. The polarising beam splitter 2 separates the light from the light source 1 into a P-polarised light component being transmitted light and an S-polarised light component being reflected light. A light reflector 39 deflects the S-polarised light component to the λ/2 plate 35. The λ/2 plate 35 rotates the polarised light plane through 90° to convert it into a P-polarised light component which travels straight ahead to the liquid crystal light valve 8. A light reflector 40 also reflects the P-polarised light component from the polarising beam splitter 2 to the aperture of the liquid crystal light valve 8. The P-polarised light components are irradiated together in parallel and without any space between them in the same direction.

According to this arrangement, in order to project both of the polarised light components substantially in parallel and oriented respectively in a single polarising direction, the λ/2 plate 35 may be arranged either in front of the light reflector 39, or in front or to the rear of the light reflector 40.

Figure 11 is a diagram showing an embodiment of a polarisation direction converter in accordance with the present invention using a λ/2 plate 35 as the polarisation direction converter 3. The polarising beam splitter 2 separates the light from the light source 1 into a P-polarised light component being transmitted light and an S-polarised light component being reflected light. The λ/2 plate 35 is arranged close to the polarising beam splitter 2. The transmitted P-polarised light component is rotated through 90° after passing through the λ/2 plate 35 so that it is converted into an S-polarised light component travelling straight ahead. The S-polarised light component reflected by the polarising beam splitter 2 is reflected by a light reflector 41 in the same direction as that of the other S-polarised light component, whereby the two S-polarised light components are separately projected substantially in parallel and without any space between them onto the aperture of the liquid crystal light valve 8.

In this case, a similar function can be obtained by arranging the λ/2 plate 35 in the light path of the S-polarised light component.

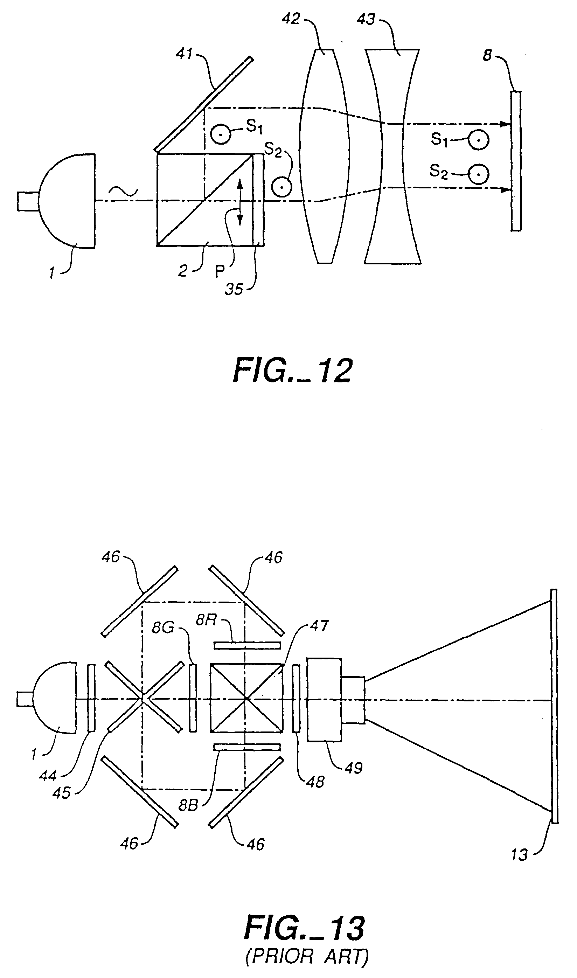

Figure 12 shows a further embodiment in which a combination of a convex lens 42 and a concave lens 43 is arranged immediately after the polarisation direction converter 3 shown in Figure 11. This configuration can be applied similarly in the other embodiment. The vertical cross sectional area of the light emitted in parallel from the polarisation direction converter 3 is approximately twice that of the light from the light source 1. Therefore, in order to utilise the light from the light source 1 effectively, the aperture area of the liquid crystal light valve 8 is required to be enlarged to be nearly twice as large as the vertical cross sectional area of the light emitted from the light source 1. The present embodiment may provide a bright and compact liquid crystal display device by employing a smaller liquid crystal light valve in combination with a larger light source. In the manner shown in the foregoing embodiments, the parallel light emitted by the polarisation direction converter 3 is condensed by the convex lens 42 and re-converted to a parallel beam by the concave lens 43, so that the light from the concave lens 43 is changed into a parallel light with a small cross sectional area by comparison with that of the light entering the convex lens 42 and can be irradiated separately onto the liquid crystal light valve 8. Further, if the aspect ratio of the liquid crystal light valve 8 is 4:3 or 16:9 in the above mentioned embodiments the longer the sideways aperture the liquid crystal light valve 8 has, the more the half-separating irradiation shows notable effect. The half-separation irradiation of the present invention provides an improved illumination ratio for the picture image as well as a brighter picture image.

As described above almost all of the light flux generated from the light source 1 can enter the aperture of the liquid crystal light valve 8. The light source 1 and the polariser 14 are arranged at a proper distance so that the polariser 14 is outside the influence of heat from the light source 1 on the absorption of the polarised light component. A low revolution type cooling fan can provide stable reliability for the device under a wide range of ambient temperatures. Therefore, a high revolution type cooling fan with high cooling capability is not required. With respect to the temperature condition, it is preferable to remove the polariser 14.

As is described above, a projection type liquid crystal display device is constructed such that light emitted from a light source is separated into a P-polarised light component and an S-polarised light component by a polarising beam splitter, both of the polarised light components are directed in the same polarising direction and substantially in parallel, and a picture image is projected by separately projecting the components onto the aperture of a liquid crystal light valve, whereby most of the light sent from the light source can be incident onto the aperture of the liquid crystal light valve and a high intensity picture image can be realised by utilising the maximum light flux from the light source.

In addition, since the incident side polariser 14 is placed at a proper distance from the light source and beyond the influence of heat on the absorption of the unnecessary polarised light component, a low revolution type cooling fan performs satisfactorily in the present invention. An improved projection type liquid crystal display device having stable reliability under a wide range of ambient temperatures and suitable for current audio and video devices can thus be provided.

**Claims**

1. A projection type display device having a light source (1), a light valve (8) for modulating light from said light source, a projection lens (12) for projecting light from said light valve, and

   a polarizing beam splitter (2) arranged in an optical path between said light source (1) and said light valve (8) to separate incident light into a first and a second perpendicularly linearly polarized light components propagating perpendicular to each other, characterized by comprising:

   a polarization-converting means (35) for polarization-converting the first of said linearly-polarized light component to the polarization state of the second component and a reflecting means (41) for reflecting the second of said linearly-polarized light components in the direction of propagation of the first component so that the components have the same polarization state and are emitted in substantially the same direction toward the light valve.

2. A projection type display device according to claim 1, wherein said first linearly-polarized light component, polarization-converted by said polarization-converting means (35), is a transmitted light from a splitting layer (17) of said polarizing beam splitter (2), and said second linearly-polarized light component, reflected by the reflecting means (41), is a reflected light from said splitting layer (17) of said polarizing beam splitter (2).

**Patentansprüche**

1. Projektionsanzeigevorrichtung mit einer Lichtquelle (1), einem Lichtventil (8) zur Modulation von Licht von der Lichtquelle, einer Projektionslinse (12) zum Projizieren von Licht von dem Lichtventil und einem in einem optischen Weg zwischen der Lichtquelle (1) und dem Lichtventil (8) angeordneten Polarisationsstrahlteiler (2) zur Trennung einfallenden Lichts in eine erste und eine zweite orthogonal-linearpolarisierte Lichtkomponente, die sich orthogonal zueinander ausbreiten,
   **gekennzeichnet durch** eine Polarisationswandlereinrichtung (35) zur Polarisationswandlung der ersten linearpolarisierten Lichtkomponente in den Polarisationszustand der zweiten Komponente und eine Reflexionseinrichtung (41) zum Reflektieren der zweiten der linearpolarisierten Lichtkomponenten in Ausbreitungsrichtung der ersten Komponente, so daß die Komponenten denselben Polarisationszustand besitzen und im wesentlichen in derselben Richtung zum Lichtventil hin gesendet werden.

2. Projektionsanzeigevorrichtung nach Anspruch 1, bei der die erste, durch die Polarisationswandlereinrichtung (35) polarisationsgewandelte linearpolarisierte Lichtkomponente durch eine Teilerschicht (17) des Polarisationsstrahlteilers (2) durchgelassenes Licht ist und die zweite, von der Reflexionseinrichtung (41) reflektierte linearpolarisierte Lichtkomponente an der Teilerschicht (17) des Polarisationsstrahlteilers (2) reflektiertes Licht ist.

**Revendications**

1. Dispositif d'affichage du type à projection ayant une source de lumière (1), un modulateur de lumière (8) pour moduler la lumière en provenance de ladite source de lumière, une lentille de projection (12) pour projeter la lumière en provenance dudit modulateur de lumière, et un séparateur de faisceau de polarisation (2) agencé dans un chemin optique entre ladite source de lumière (1) et ledit modulateur optique (8) pour séparer la lumière incidente en une première et en une seconde composantes de lumière polarisées linéairement perpendiculairement qui se propagent perpendiculairement l'une par rapport à l'autre, caractérisé en ce qu'il comprend :

   un moyen de transformation de polarisation (35) pour transformer la polarisation de la première des composantes de lumière polarisées linéairement en l'état de polarisation de la seconde composante, et un moyen de réflexion (41) pour réfléchir la seconde desdites composantes de lumière polarisées linéairement dans le sens de propagation de la première composante, de sorte que les composantes ont le même état de polarisation et sont émises sensiblement dans le même sens vers le modulateur de lumière.

2. Dispositif d'affichage du type à projection selon la revendication 1, dans lequel ladite première composante de lumière polarisée linéairement, ayant sa polarisation transformée par ledit moyen de transformation de polarisation (35), est une lumière transmise en provenance d'une couche de séparation (17) dudit séparateur de faisceau de polarisation (2), et ladite seconde composante de lumière polarisée linéairement, réfléchie par le moyen de réflexion (41), est une lumière réfléchie en provenance de ladite couche de séparation (17) dudit séparateur de faisceau de polarisation (2).

FIG._1

*FIG._2*

*FIG._3*

FIG._4

FIG._5

FIG._6

FIG._7

*FIG._8*

*FIG._9*

FIG._10

FIG._11

*FIG._12*

*FIG._13*
*(PRIOR ART)*

14